# EUROPÄISCHE PATENTSCHRIFT

(11) **EP 0 376 929 B1**
(45) Veröffentlichungstag und Bekanntmachung des Hinweises auf die Patenterteilung: **06.04.1994**
(21) Anmeldenummer: 90104038.6
(22) Anmeldetag: 15.04.1986
(51) Int. Cl.: B29C 45/17, B29C 45/74

(54) **Plastifiziereinheit einer Kunststoff-Spritzgiessmaschine**
Plasticising unit for a plastic injection-moulding machine
Unité de plastification pour machine de moulage par injection de matière plastique

(30) Priorität: 15.04.1985 DE 3513410; 31.12.1985 DE 3546415
(43) Veröffentlichungstag der Anmeldung: 04.07.1990
(62) Teilanmeldung aus: 86105181.1
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 069 221
- EP-A- 0 198 473
- DE-A- 3 228 434
- DE-A- 3 229 223
- FR-A- 1 188 316
- FR-A- 2 248 143
- GB-A- 751 706
- US-A- 3 317 958
- US-A- 3 730 262
- PATENT ABSTRACTS OF JAPAN, Band 8, Nr. 253 (M-339)[1690] 20. November 1984;& JP-A-59 127 713 (FUIJ XEROX K.K.) 23-07-1984

## Beschreibung

Die Erfindung betrifft eine Plastifiziereinheit entsprechend dem Oberbegriff des Patentanspruches 1.

Bei einer bekannten (EP-PS 0 069 221; DE-OS 32 29 223) Plastifiziereinheit dieser Art umfaßt die automatisch wechselbare Einheit einen mit dem Plastifizierzylinder fest verbundenen Kupplungsblock mit Kunststoff-Einzugskanal, der unter anderem als Standorgan für die abgekuppelte Plastifiziereinheit dient. Am Versorgungsblock ist eine automatische Kupplung in den zur Plastifiziereinheit führenden Versorgungsleitungen angeordnet. Diese Kupplung ist für eine vertikale Kupplungsrichtung ausgelegt.

Bekannt sind auch Rohr-Heizkörper, die im gewerblichen Elektrowärme-und Apparatebau zur Luft- und Flüssigkeitserwärmung Anwendung finden. Diese sind aus einem Rohr aus Chromnickelstahl und Heizleitern aufgebaut, die im Rohr in hochverdichtetem Magnesium-Oxid oder Magnesium-Silikat eingebettet sind. Sie sind daher in Anpassung an spezifische Anwendungserfordernisse biegbar (Prospekt ELTRA GmbH & Co. KG Leicht & Trambauer, Elektrowärmetechnik, Postfach 1120, D-6102 Pfungstadt; Prospekt Türk + Hillinger GmbH Elektrowärme, Friedrichstr. 21, D-7200 Tuttlingen). Solche Rohr-Heizkörper werden auch zur Beheizung der Zylinder von Extrudern eingesetzt (US-PS 3,317,958). Ihre heizleiterfreien Endabschnitte sind mit ihren Versorgungsanschlüssen nach außen abgebogen und an Versorgungsleitungen angeschlossen, die parallel zur Extruderachse verlaufen.

Der Erfindung liegt die Aufgabe zugrunde, eine Plastifiziereinheit der eingangs genannten Gattung derart weiterzubilden, daß sie beim Wechsel leichter zu handhaben und gegen betriebsbedingte Erschütterungen unempfindlicher ist.

Diese Aufgabe wird durch die im Patentanspruch 1 genannten Merkmale gelöst.

Bei einer solchen Ausbildung ist die Plastifiziereinheit beim Wechsel in mehrfacher Hinsicht leichter zu handhaben. Zum einen ist der unmittelbar an den Kupplungsblock ankuppelbare Plastifizierzylinder beim Wechsel vom Kupplungsblock befreit, was zu einer wesentlichen Gewichtsverminderung der auswechselbaren Einheit führt. Zum anderen vermag das Schutzprofil für die Versorgungsanschlüsse dank seiner spezifischen Ausbildung nach Abkupplung der Plastifiziereinheit als deren Standorgan dienen.

Das Schutzprofil schirmt einen Schutzraum ab, in welchem die Versorgungsanschlüsse der Rohr-Heizkörper von deren ausgebogenen Endabschnitten frei tragend gehalten sind.

Der Plastifizierzylinder wird zur An- bzw. Abkupplung in bzw. aus Arbeitsposition in gleicher Richtung, nämlich horizontal bewegt wie beim Auf- bzw. Absetzen von der Spritzgießform während des Spritzbetriebes.

Die Kontaktanschlüsse der Versorgungsleitungen an die am Kupplungsblock angeordneten Kontaktanschlüsse der Energie zuführenden Leitungen sind somit beim Trennen und Anschließen in gleicher Richtung, nämlich horizontal beansprucht wie bei den betriebsbedingten rhythmischen axialen Erschütterungen der Plastifiziereinheit, welche durch das periodische Aufsetzen des Plastifizierzylinders auf die Spritzgießform verursacht werden. Durch die Abfederung der auf horizontale Kontaktrichtung ausgelegten Kontaktanschlüsse am Schutzprofil sind diese Beanspruchungen gleichermaßen minimiert, so daß sie auf die Dauer keine zerstörenden Einflüsse auf die Kontaktanschlüsse der Versorgungsleitungen ausüben können.

Nachstehend wird die Erfindung anhand der Zeichnung an einem Ausführungsbeispiel erläutert.

Es zeigen:
- Fig. 1: die Plastifiziereinheit in Seitenansicht (Düse; Schalen der Spannhülsen und Schutzprofil geschnitten) und
- Fig. 2,3: die Plastifiziereinheit in Rück- und Stirnansicht.

Die Plastifiziereinheit ist für die mit einer Wechseleinrichtung zum Wechseln der Plastifiziereinheit ausgerüsteten Spritzgießeinheit einer Kunststoff-Spritzgießmaschine bestimmt und geeignet. Der Plastifizierzylinder 10 der Plastifiziereinheit ist mit mehreren unabhängig voneinander steuerbaren Widerstandsheizungen versehen. Als Widerstandsheizungen finden Rohr-Heizkörper Verwendung. Axial gespaltene Spannhülsen sind durch Schalen 11c gebildet, die mit Hilfe von tangential angreifenden und diametral angeordneten Spannbolzen auf die Mantelfläche des Plastifizierzylinders 10 aufpreßbar sind. Heizleiterfreie Endabschnitte 11e der zu Heizwendeln 11 gebogenen Rohr-Heizkörper sind mit Versor gungsanschlüssen 12 aus dem radius der Heizwendeln 11 herausgebogen und samt dem Versorgunsleitungen 15 von einer im Abstand von den Spannschalen 11c angeordneten Profilschiene 13 abgedeckt, die als Schutzprofil dient. Die Profilschiene 13 ist als Standorgan ausgebildet. Das Standorgan ermöglicht ein Abstellen der von der Spritzgießeinheit abgekuppelten Plastifiziereinheit in stabiler Gleichgewichtslage. Im zeichnerisch dargestellten Ausführungsbeispiel ist der Steg der Profilschiene 13 als eine plane Stellfläche 13a ausgebildet, die als Standorgan dient.

Der von der Spritzgießeinheit abgekuppelte Plastifizierzylinder 10 ist mittels horizontaler Stege 14 gehaltert, die in den vertikalen Wandungen der Profilschiene 13 abgestützt sind. In den Stegen 14 sind die vertikalen Schenkel von Spannbügeln 14a aufgenommen, welche den Plastifizierzylinder 10 umschließen.

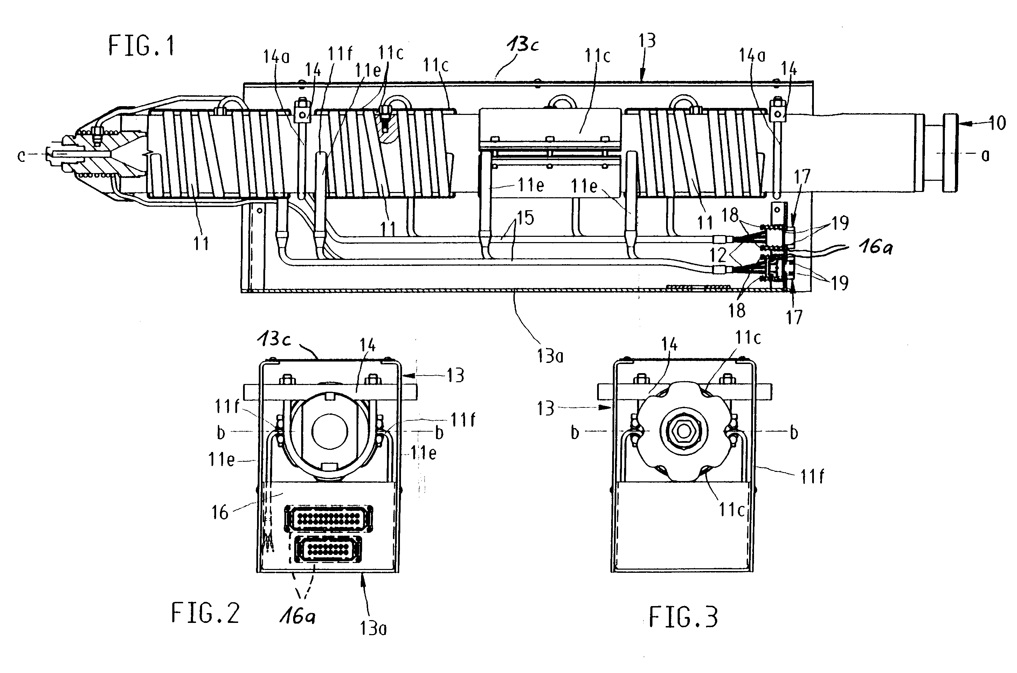

Wie insbesondere aus den Figuren 2 und 3 ersichtlich, sind die Endabschnitte 11e der Heizwendeln 11 je in einer durch die Zylinderachse a-a gehenden horizontalen Ebene b-b über eine zur Wendelkrümmung gegensätzliche, einen Radius 11f bildende Krümmung in die Vertikale abgebogen. Die Versorgungsanschlüsse 12 sind von den ausgebogenen Endabschnitten 11e frei tragend gehalten. Dadurch können sie mit den angeschlossenen Anfangsabschnitten der flexiblen Versorgungsleitungen 15 den Wärmedehnungen der Heizwendeln 11 widerstandsfrei folgen, wobei sie sich in einem von der Profilschiene 13 abgeschirmten Schutzraum befinden. Die Profilschiene 13 ist mittels einer Deckplatte 13c zu einem sich beiderseits des Schwerpunktes der Plastifiziereinheit etwa gleich weit axial erstreckenden Rechteckrohr ergänzt. In diesem sind die Versorgungsleitungen 15 der Heizwendeln 11 zu einer rückseitigen vertikalen Steckerplatte 16 mit Durchbrüchen 16a zur Aufnahme von Steckern 17 geführt. Die Stecker 17 der Versorgungsleitungen 15 sind auf horizontalen Lagerstiften 18 der Steckerplatte 16 begrenzt axial verschieblich gelagert. Dabei liegen sie unter der Wirkung vorgespannter Federn 19 über Zentrierschultern an der Steckerplatte 16 an.

## Patentansprüche

1. Plastifiziereinheit für die mit einer Einrichtung zum Wechseln der Plastifiziereinheit ausgerüsteten Spritzgießeinheit einer Kunststoff-Spritzgießmaschine, mit Mitteln zum Abkuppeln der Plastifiziereinheit von der Spritzgießeinheit sowie mit einem Plastifizierzylinder (10) mit mehreren Widerstandsheizungen (11), deren Heizleiter in keramischen Isolierpackungen und in etwa gleichem Abstand von der Mantelfläche des Plastifizierzylinders in gleichmäßiger Verteilung zur Übertragung der Heizenergie angeordnet sind,
sowie mit Halteorganen für den Angriff der die Plastifiziereinheit beim Wechsel transportierenden Transportmittel der Wechseleinrichtung und mit einem Standorgan zum Abstellen der von der Spritzgießeinheit abgekuppelten Plastifiziereinheit in stabiler Gleichgewichtslage,
dadurch gekennzeichnet, daß als Widerstandsheizungen Rohr-Heizkörper Verwendung finden,
daß heizleiterfreie Endabschnitte (11e) der Rohr-Heizkörper auf größeren Abstand zur Mantelfläche des Plastifizierzylinders herausgebogen und mit ihren Versorgungsanschlüssen (12) an Versorgungsleitungen (15) angeschlossen sind, die parallel zur Zylinderachse (a-a) verlaufen, wobei die Endabschnitte (11e) und die Versorgungsleitungen (15) von einem Schutzprofil (U-Profilschiene 13) abgedeckt sind, welches als das Standorgan (Stellfläche 13a) ausgebildet ist, und daß die Versorgungsleitungen (15) zu einer rückseitigen vertikalen Steckerplatte (16) des Schutzprofils geführt sind, auf welcher die Stecker (17) der Versorgungsleitungen (15) auf horizontalen Lagerstiften (18) begrenzt axial verschieblich gelagert sind und unter der Wirkung vorgespannter Schraubenfedern (19) über Zentrierschultern an der Steckerplatte (16) anliegen.

2. Plastifiziereinheit nach Patentanspruch 1, dadurch gekennzeichnet, daß die Endabschnitte (11e) der zu Heizwendeln (11) gebogenen Rohr-Heizkörper je in einer durch die Zylinderachse (a-a) gehenden horizontalen Ebene (b-b) über eine zur Wendelkrümmung gegensätzliche Krümmung (Radius 11f) in die Vertikale abgebogen sind.

3. Plastifiziereinheit nach Patentanspruch 1 oder 2, dadurch gekennzeichnet, daß die U-Profilschiene (13) mittels einer Deckplatte (13c) zu einem sich beiderseits des Schwerpunktes der Plastifiziereinheit etwa gleich weit axial erstreckenden Rechteckrohr ergänzt ist.

## Claims

1. Plasticising unit for the injection moulding unit of a plastics material injection moulding machine, which injection moulding unit is provided with a device for exchanging the plasticising unit, having means for uncoupling the plasticising unit from the injection moulding unit and having a plasticising cylinder (10) provided with a plurality of resistance heaters (11), the heating wires of which are disposed in ceramic insulating packs and are disposed at substantially equal spacings from the surface of the plasticising cylinder in a uniform distribution for the transmission of the thermal energy, and also having mounting means for the attachment of the conveyor means of the exchanging device, which means convey the plasticising unit during the replacement operation, and having a stand for disconnecting the plasticising unit, which has been uncoupled from the injection moulding unit, in stable equilibrium, characterised in that flat-tube heating bodies are used as resistance heaters, in that end portions (11e), which are free of heating wires, of the flat-tube heating bodies are bent so as to have a greater spacing from the surface of the plasticising cylinder and are connected, by their supply terminals (12), to supply cables (15), which extend parallel to the cylinder axis (a-a), the end portions (11e) and the supply cables (15) being covered by a casing (U-shaped casing 13), which is configured as the stand (setting face 13a), and in that the supply cables (15) extend to a rearward vertical plug panel (16) of the casing, on which panel the plugs (17) of the supply cables (15) are axially displaceably mounted to a limited extent on horizontal support pins (18) and abut against the plug panel (16) via centering shoulders by the effect of initially tensioned coil springs (19).

2. Plasticising unit according to claim 1, characterised in that the end portions (11e) of the flat-tube heating bodies, which are bent to form heater coils (11), are each bent into the vertical in a horizontal plane (b-b), which extends through the cylinder axis (a-a), via a curved portion (radius 11f) oppositely orientated to the curved course of the coil.

3. Plasticising unit according to claim 1 or 2, characterised in that the U-shaped casing (13) is completed by means of a top plate (13c) to form a rectangular tube, which extends axially to approximately equal distances bilaterally from the centre of gravity of the plasticising unit.

## Revendications

1. Unité de ramollissement destinée à l'unité de moulage par injection d'une machine de moulage de matière plastique par injection, celle-ci étant équipée d'un dispositif pour changer l'unité de ramollissement, comprenant des moyens pour désaccoupler l'unité de ramollissement de l'unité de moulage par injection, comprenant aussi un cylindre de ramollissement (10) pourvu de plusieurs dispositifs de chauffage électrique par résistance (11) dont les conducteurs chauffants sont disposés dans des garnitures isolantes en céramique, à une distance à peu près égale de la surface latérale du cylindre de ramollissement et en étant régulièrement répartis en vue de la transmission de l'énergie thermique, comprenant aussi des organes de maintien destinés à saisir les moyens de transport qui déplacent l'unité de ramollissement lors du changement, et comprenant un organe de pose en vue de poser dans une position d'équilibre stable l'unité de ramollissement qui a été désaccouplée de l'unité de moulage par injection, caractérisée par le fait que des corps chauffants tubulaires sont utilisés comme dispositifs de chauffage électrique par résistance, par le fait que des parties terminales (11e) exemptes de conducteurs chauffants des corps chauffants tubulaires sont recourbées pour venir à une distance importante de la surface latérale du cylindre de ramollissement, et qu'elles sont raccordées avec leurs raccords d'alimentation (12) à des conduits d'alimentation (15) qui s étendent parallèlement à l'axe (a-a) du cylindre, les parties terminales (11e) et les conduits d'alimentation (15) étant recouverts par un profilé de protection (rail profilé en U 13) qui est réalisé sous la forme de l'organe de pose (surface de pose 13a), et par le fait que les conduits d'alimentation (15) sont guidés vers une plaque à prises de courant verticale arrière (16) du profité de protection sur laquelle les prises de courant (17) des conduits d'alimentation (15) sont montées sur des tiges de montage horizontales (18) en pouvant coulisser d'une manière limitée dans le sens axial, et en étant en outre soumises à l'action de ressorts de rappel (19) par l'intermédiaire d'épaulements de centrage qui sont ménagés sur la plaque à prises de courant (16).

2. Unité de ramollissement selon la revendication 1, caractérisée par le fait que les parties terminales (11e) des corps chauffants tubulaires qui sont cintrées pour former des spires chauffantes (11) sont à chaque fois recourbées à la verticale dans un plan horizontal (b-b) passant par l'axe (a-a) du cylindre, et ce, par l'intermédiaire d'une courbure (rayon 11f) qui est opposée à la courbure des spires.

3. Unité de ramollissement selon la revendication 1 ou 2, caractérisée par le fait que le rail profilé en U (13) est complété par une plaque de recouvrement (13c) pour former un tube rectangulaire qui s'étend des deux côtés du centre de gravité de l'unité de ramollissement, et ce, à peu près sur la même longueur dans le sens axial.
